Europäisches Patentamt

European Patent Office

Office européen des brevets

(11) Publication number: **0 518 556 A1**

# EUROPEAN PATENT APPLICATION

(21) Application number: **92305105.6**

(22) Date of filing: **03.06.92**

(51) Int. Cl.5: **C08J 9/02**, C09D 5/08, C09D 183/04, C09D 183/08

(30) Priority: **11.06.91 GB 9112528**

(43) Date of publication of application: **16.12.92 Bulletin 92/51**

(84) Designated Contracting States: **DE FR GB SE**

(71) Applicant: **Dow Corning Limited Cardiff Road Barry South Glamorgan CF6 7YL Wales(GB)**

(72) Inventor: **Jones, Gareth Matthew 2 Powys Road Penarth, South Glamorgan, Wales(GB)**

(74) Representative: **Bullows, Michael et al Dow Corning Limited Cardiff Road Barry South Glamorgan CF6 7YL Wales(GB)**

(54) Anti-corrosion treatment with siloxanes.

(57) The specification describes and claims a method of providing an anti-corrosion coating on steel. The coating is formed by application of a silicone based foamable composition. Preferred compositions are formed by mixing ingredients selected to provide a cured foam having a density less than 150 Kg/m$^3$ within 120 seconds of mixing at 20°C. The compositions comprise polysiloxanes having alkylhydrogensiloxane units, silicon-bonded hydroxyl groups, and fluorinated groups and a hydrosilylation catalyst.

EP 0 518 556 A1

This invention is concerned with anti-corrosion treatment and is particularly concerned with the treatment of mild steel to inhibit corrosive effects of moisture and salty environments on the mild steel.

It is well known that mild steel is prone to corrosion in moist atmospheres and particularly so in moist atmospheres where salts are present. In those industries which employ mild steel as a major component the problems associated with corrosion are well known. Numerous proposals have been made for treatments intended to inhibit or prevent corrosion of steel, many of which suggested coatings of various types. Various standard methods have been developed for testing the efficacy of corrosion inhibiting treatments, for example the salt spray tests employed in the automobile industry.

Many prior proposals for anti-corrosion treatment of steel involve the application of several coats of coating composition in order to be effective and it is a normal practice in the automobile industry to apply one or more coats of anti-corrosion treatment, surface primer and finisher coat in order to achieve an acceptable corrosion resistant finish.

We have now found, surprisingly, that a coating of selected silicone based foam composition may be readily applied to bare mild steel sheet or to mild steel coated with alkyd resin or epoxy resin coatings, to provide a cured foamed coating and that the steel so coated demonstrates exceptional resistance to corrosion under test conditions.

The present invention provides in one of its aspects a method of treating steel to provide an anti-corrosion coating thereon which comprises curing on the surface of the steel a coating of a silicone based foamable composition formed by mixing ingredients comprising (a) one or more polysiloxanes having not less than three alkylhydrogensiloxane units per molecule, (b) one or more polysiloxanes having not less than two silicon-bonded hydroxyl groups per molecule, (c) one or more compounds having carbon-bonded hydroxyl groups present in a proportion to provide from 0 to 3% by weight of the composition, (d) a polyorganosiloxane comprising

$$[F(CF_2)_m(CH_2)_nO]_pSiO_{\frac{(4-p)}{2}},$$

$R_3SiO_{1/2}$ and $SiO_{4/2}$ units and silicon-bonded hydroxyl groups wherein each R represents a monovalent hydrocarbon group containing from 1 to 20 carbon atoms, m is an integer having an average value from 1 to 20 n has the value 1 or 2, p has the value 1, 2 or 3 and (e) a noble metal catalyst for promoting reaction between the ingredients, the ingredients being present in the mixed composition in proportions such that the ratio of silicon-bonded hydrogen atoms of said one or more polysiloxanes having not less than three alkylhydrogensiloxane units per molecule to silicon-bonded hydroxyl groups and carbon-bonded hydroxyl groups of the other ingredients of the composition lies in the range 1:1 to 6:1.

Foamable silicone compositions suitable for use in a method according to the present invention may be provided in two parts which may have a similar viscosity one to the other to facilitate mixing of the parts of the composition prior to application to the steel. Preferably a two part composition is employed of which the two parts each have the same viscosity and this viscosity is less than 15,000 mm²/s. Suitable compositions include those described and claimed in European Patent Specification 338 693. These compositions demonstrate excellent adhesion to degreased mild steel without the use of an adhesive primer and do not require a heating step to effect cure. They may be formed as a coating from 0.5 to 20mm thick by spraying or spreading the mixed composition onto the steel surface. The coating may be formulated to foam and cure within 120 seconds of mixing at 20°C to provide a cellular coating having a density of less than 150Kg/m³ and comprising a predominantly open cell structure with an integrally formed surface skin.

The composition employed in a method according to the invention preferably flows, foams and cures readily at ambient temperatures of the order of 15 to 25°C. These compositions are curable to form a polysiloxane matrix which is foamed by evolution of hydrogen gas in presence of a noble metal catalyst according to the scheme ≡SiH + HOQ ----> ≡ SiOQ + H₂ .

Suitable polysiloxanes having at least three alkylhydrogensiloxane units per molecule include alkylhydrogenpolysiloxanes having units according to the general formula

$$R_qHSiO_{\frac{(3-q)}{2}}$$

in which each R represents a lower alkyl or phenyl group e.g. a methyl group, and q is 1 or 2. The alkylhydrogen polysiloxanes may also comprise units

$$R_sSiO_{\frac{(4-s)}{2}}$$

in which R is as referred to above and s is 1, 2 or 3. Reactions of the preferred compositions to generate hydrogen gas and to cure the mass through chain extension and crosslinking within the desired time span are dependent on presence of appropriate proportions of the inter-active substituents and the alkylhydrogen polysiloxane is selected accordingly. Preferably this polysiloxane has from 0.5% to 2.5% by weight of silicon-bonded hydrogen atoms. We prefer that each R represents a methyl group (Me). Preferably terminal groups of the alkylhydrogen polysiloxane have the formula $R_3SiO_{1/2}$ where each R represents a methyl group. Suitable alkylhydrogen polysiloxanes include those comprising MeHSiO units with or without the presence of $Me_2SiO$ units and having viscosities of the order of from about 1 to about 100mm$^2$/s more preferably from about 10 to about 100mm$^2$/s at 25°C.

Suitable polysiloxanes having at least two silicon-bonded hydroxyl groups are polymers which include units according to the general formula

$$R_r(OH)SiO_{\frac{(3-r)}{2}}$$

in which each R represents a lower alkyl or phenyl group e.g. a methyl group and r is 1 or 2. These polysiloxanes also comprise units

$$R_sSiO_{\frac{(4-s)}{2}}$$

in which R and s are as referred to above. These materials are preferably liquids and are chosen so that their functionality and chain length are appropriate to the viscosity required of the composition, the amount of hydrogen evolution and the degree of chain extension and crosslinking required during curing of the composition. Preferred polysiloxanes having not less than two silicon-bonded hydroxyl groups comprise silanol terminated polydiorganosiloxanes according to the general formula $HO((R_2)SiO)_tH$ in which each R represents a methyl group and t has a value up to about 25 such that the polysiloxane has a viscosity of about 30 to about 60 mm$^2$/s. Preferably these polysiloxanes also comprise a proportion of longer chain silanol terminated polydiorganosiloxanes of the formula $HO((R_2)SiO)_tH$ where each R is as aforesaid and t is an integer such that the polysiloxane has a viscosity of about 50 mm/s at 25°C.

One may also include in the composition appropriate quantities of higher functional materials as crosslinking agents. Suitable crosslinking agents include materials having three or more functional e.g. hydroxy groups per molecule. Preferred crosslinking agents include an alkoxy silane and/or a condensation product thereof capable of combining with three or more hydroxy polysiloxane molecules with release of the corresponding alcohol of the alkyd radicals, e.g. methyl trimethoxysilane, n-propylorthosilicate and ethyl polysilicate.

Compositions for use in a method according to the invention may, and preferably do, also include one or more compounds having carbon-bonded hydroxyl groups. This component (c) influences the structure of foams formed and has a significant influence on lowering the density of the cured foam. Suitable materials include the aliphatic and araliphatic alcohols and especially lower aliphatic monofunctional alcohols having up to 8 carbon atoms, e.g. methanol, n-propyl alcohol and benzyl alcohol. The component (c) is preferably present to an extent of up to 3% by weight of the composition as a whole. Its presence contributes to low density properties of the foams produced, but including too large a proportion of it leads to a reduction in the ability of the composition to cure satisfactorily.

The component (d) of a composition for use in a method according to the invention is a polyorganosiloxane comprising

$$[F(CF_2)_m(CH_2)_nO]_pSiO_{\frac{(4-p)}{2}},$$

$R_3SiO_{1/2}$, $SiO_{4/2}$ units and silicon-bonded hydroxyl groups wherein each R represents a monovalent hydrocarbon group containing from 1 to 20 carbon atoms, m is an integer having an average value of from 1 to 2, n has the value 1 or 2 and p has the value 1, 2 or 3. This polyorganosiloxane may also include from 0 to 10 percent, based on the weight of said polyorganosiloxane, of $GSiO_{3/2}$ units wherein G represents the residue obtained by removing the hydrogen atom from a hydroxyl group of a linear organic polymer selected from the group consisting of homopolymers of ethylenically unsaturated alcohols, copolymers of these alcohols with ethylenically unsaturated hydrocarbons, polyethers and polyoxyalkylene glycols wherein said organic polymer contains an average of at least one terminal hydroxyl group per molecule. These materials are more fully described and claimed in European Patent Specification 179 598.

In preferred polyorganosiloxanes (d), the molar ratio of $R_3SiO_{1/2}$ units to the total number of

$$[F(CF_2)_m(CH_2)_nO]_pSiO_{\frac{(4-p)}{2}},$$

$SiO_{4/2}$ units and $GSiO_{3/2}$ units is from 0.3 to 1.3. Preferably $\underline{m}$ represents an even integer and the average value of $\underline{m}$ is 8, $\underline{n}$ is 2 and $\underline{p}$ is 1.

Suitable polyorganosiloxanes ($\underline{d}$) include those in which the concentration of

$$[F(CF_2)_m(CH_2)_2]_p SiO_{\frac{(4-p)}{2}}$$

units is sufficient to impart a surface tension of less than $2.2 \times 10^{-4}$ newtons per centimetre at $25°C$ to a 10% by weight solution of said polyorganosiloxane in a hydroxyl endblocked polydimethylsiloxane exhibiting a viscosity of $0.08mm^2/s$ at $25°C$.

The preferred components (d) are the products of treatment of hexamethyldisiloxane coated polysilicates with the alcohol $F(CF_2)_{-8}CH_2CH_2OH$ to react with some at least of the silicon-bonded hydroxyl groups of the polysilicate. The preferred components (d) of a composition according to the invention are polyorganosiloxanes having minor amounts (e.g. up to 3%, preferably less than 1% by weight) of silicon-bonded hydroxyl groups which contribute to the total silicon-bonded hydroxyl groups of the composition.

The noble metal catalyst may be for example a rhodium catalyst but is preferably a platinum catalyst. Platinum catalysts (e) may take any of the known forms, ranging from platinum as deposited on carriers such as silica gel or powdered charcoal, to platinic chloride, salts of platinum and chloroplatinic acids. A preferred form of platinum is chloroplatinic acid either as the commonly obtainable hexahydrate or the anhydrous form, on account of its easy dispersibility in organosilicon systems and its non-effect on colour of the mixture. Platinum complexes may also be used e.g. those prepared from chloroplatinic acid hexahydrate and divinyl tetramethyldisiloxane. If desired platinum catalyst inhibitors e.g. alkynols (e.g. methyl butynol) or vinyl cyclic polysiloxanes may be included, although their rate controlling characteristics should be such that rapid setting of the deposited mixing composition is not undesirably extended.

The proportions of the components (a), (b), (c), (d) are chosen so that the ratio of silicon-bonded hydrogen atoms of component (a) to hydroxyl groups provided by the ingredients (b), (c), (d) is in the range 1:1 to 6:1, more preferably in the range 4:1 to 5:1 in order to obtain maximum adhesion properties. If the ratio is less than 1:1 the compositions cure slowly to provide foams of higher density whereas if the ratio is greater than 6:1 the foams are of less elastomeric form.

Compositions used in a method according to the invention foam and cure when mixed at room temperature and humidity. Accordingly the component (a) is stored separated from the other components until required for use. In order to enable simplicity and ease of mixing the components at the application site, it is preferred to store the compositions in two-part form in which each of the parts is of substantially the same viscosity. For example a first part may comprise the components (a) and (d) and a portion of component (b), and a second part may comprise the remainder of the component (b) and the components (c) and (e), so that the first and second parts may be mixed together in a ratio of 1:1 by volume or 1:1 by weight as desired.

If desired, minor amounts of other materials may be included in a composition for use in a method according to the invention, for example fillers, colorants, extenders and crosslinking agents.

In order that the invention may become more clear there now follows a description of an example composition and its use in a method according to the invention. All parts are by weight unless otherwise specified.

A first example composition comprised two parts A and B for admixture in a ratio of 1:1. The part A comprised two $\alpha$, w, dihydroxy polydimethylsiloxanes namely a first $\alpha$, w dihydroxy polysiloxane having a viscosity of about $42$ $mm^2/s$ at $25°C$ and 72 parts of a second $\alpha$, w dihydroxy polydimethylsiloxane having a viscosity of about $2000$ $mm^2/s$ at $25°C$, 3 parts n-propyl alcohol and 0.7 part chloroplatinic acid catalyst. The part B comprised 68 parts of the second $\alpha$, w dihydroxy polydimethylsiloxane, 26 parts of trimethylsiloxy endblocked methyl hydrogen polysiloxane having a viscosity of about $30$ $mm^2/s$ at $25°C$ and 6 parts of a surfactant. The surfactant was prepared in a glass reactor equipped with a thermometer, reflux condensor, mechanically driven stirrer and Dean-Stark apparatus to retain a portion of the condensate returning to the reactor, from 123 parts of a 70% solution in xylene of a resinous siloxane copolymer, 10.0 parts of an alcohol having the average formula $F(CF_2)_8 H_2 CH_2 OH$, 66 parts of xylene, 0.5 part of a solution of potassium hydroxide in ethanol and two parts of an acid clay. The siloxane copolymer consisted essentially of repeating units of the formulae $(CH_3)_3 SiO_{\frac{1}{2}}$ and $SiO_{4/2}$ in a molar ratio of about 0.75:1.0 respectively, and contained about 0.5% by weight of silicon-bonded hydroxyl groups. The contents of the reactor were heated at the boiling point for one hour, then cooled to $50°C$ and neutralized by bubbling carbon dioxide through the reaction mixture. The resultant mixture was then combined with 100 parts of a trimethylsiloxy endblocked polydimethylsiloxane exhibiting a viscosity of $10mm^2/s$ and a surface tension of $2.03 \times 10^{-4}$ newtons/cm, and the volatile materials were then evaporated under reduced pressure. The resultant clear solution exhibited a surface tension of $1.92 \times 10^{-4}$ newtons/cm and contained a polyorganosiloxane with units of the average formula $F(CF_2)_8CH_2CH_2OSiO_{3/2}$, $(CH_3)_3SiO_{\frac{1}{2}}$ and $SiO_{4/2}$ having about 2.48% silicon-bonded hydroxyl groups.

When the first example composition was formed by mixing the Parts A and B in a ratio of 1:1, the methylhydrogen polysiloxane component of the composition provided 0.39 mole of silicon-bonded hydrogen atoms, the first $\alpha$, w dihydroxy polydimethylsiloxane provided about 0.056 mole silicon-bonded hydroxyl groups, the second $\alpha$, w dihydroxy polydimethylsiloxanes provided about 0.012 mole silicon-bonded hydroxyl groups, the propyl alcohol provided 0.049 mole carbon-bonded hydroxyl groups and the surfactant provided 0.009 mole silicon-bonded hydroxyl groups. The ratio of silicon-bonded hydrogen atoms to silicon-bonded hydroxyl groups plus carbon-bonded hydroxyl groups in the mixed composition was thus 3.1:1. The viscosity of each of the parts A and B was about 900 $mm^2$/s at 25°C.

Portions of the parts A and B were mixed in a ratio of 1:1 and stirred with a spatula for 10 seconds.

Mild steel panels were solvent cleaned and sanded down to bare metal. Approximately half the panel was dipped in the liquid foam mixture. After allowing the composition to cure for about 10 minutes the panel was placed directly into a salt spray chamber according to ASTM B117-90. Another set of samples was allowed to stand for 24 hours before placing in the chamber. Samples were taken out of the salt spray chamber at various intervals up to 1000 hours. None of the samples showed any sign of corrosion where the foam had covered the metal even on the sharp edges of the panel which had the thinnest coating of approximately 1/16" (1.5mm).

Panels were prepared in a similar manner to that described above. After a period of 1 year's immersion in a standard salt water solution simulating sea-water, during which the foam coating had become completely saturated, the coating was removed and no corrosion was seen on the surface on which the foam coating had been present. The only corrosion evident was due to metal flaking off, having corroded underneath the extreme edge of the coating.

## Claims

1. A method of treating steel to provide an anti-corrosion coating thereon which comprises curing on the surface of the steel a coating of a silicone based foamable composition formed by mixing ingredients comprising (a) one or more polysiloxanes having not less than three alkylhydrogensiloxane units per molecule, (b) one or more polysiloxanes having not less than two silicon-bonded hydroxyl groups per molecule, (c) one or more compounds having carbon-bonded hydroxyl groups present in a proportion to provide from 0 to 3% by weight of the composition, (d) a polyorganosiloxane comprising

$$[F(CF_2)_m(CH_2)_nO]_pSiO_{\frac{(4-p)}{2}},$$

$R_3SiO_{1/2}$ and $SiO_{4/2}$ units and silicon-bonded hydroxyl groups wherein each R represents a monovalent hydrocarbon group containing from 1 to 20 carbon atoms, m is an integer having an average value from 1 to 20, n has the value 1 or 2, p has the value 1, 2 or 3 and a noble metal catalyst for promoting reaction between the ingredients, the ingredients being present in the mixed composition in proportions such that the ratio of silicon-bonded hydrogen atoms of said one or more polysiloxanes having not less than three alkylhydrogensiloxane units per molecule to silicon-bonded hydroxyl groups and carbon-bonded hydroxyl groups of the other ingredients of the composition lies in the range 1:1 to 6:1.

2. A method according to Claim 1 wherein the polysiloxanes (a) comprise units of the general formula

$$R_qHSiO_{\frac{(3-q)}{2}}$$

and optionally comprising units of the general formula

$$R_sSiO_{\frac{(4-s)}{2}}$$

in which R is a lower alkyl or phenyl group, q is 1 or 2 and s is 1, 2 or 3 and having 0.5% to 2.5 by weight of silicon-bonded hydrogen atoms.

3. A method according to Claim 2 wherein the polysiloxane (a) has a viscosity of about 10 to about 100 $mm^2$/s at 25°C.

4. A method according to Claim 1 wherein the polysiloxanes (b) comprise units according to the general formula

$$R_r(OH)SiO_{\frac{(3-r)}{2}}$$

in which R is a lower alkyl or phenyl group and r is 1 or 2 and also units according to the general formula

$$R_sSiO_{\frac{(4-s)}{2}}$$

in which R is a lower alkyl or phenyl group and s is 1, 2 or 3.

5. A method according to Claim 4 wherein the polysiloxane (b) comprises a silanol end-blocked polydiorganosiloxane according to the general formula $HO((R_2)SiO)_tH$ in which each R represents a methyl group and t has a value up to about 25 such that the polydiorganosiloxane has a viscosity of about 30 to about 60 mm²/s.

6. A method according to Claim 1 wherein the polyorganosiloxane (d) also comprises from 0 to 10 percent based on the weight of said polyorganosiloxane, of $GSiO_{3/2}$ units wherein G represents the residue obtained by removing the hydrogen atom from a hydroxyl group of a linear organic polymer selected from the group consisting of homopolymers of ethylenically unsaturated alcohols, copolymers of these alcohols with ethylenically unsaturated hydrocarbons, polyethers and polyoxyalkylene glycols wherein said organic polymer contains an average of at least one terminal hydroxyl group per molecule such that the molar ratio of $R_3SiO_{\frac{1}{2}}$ units to the total number of

$$[F(CF_2)_m(CH_2)_nO]_pSiO_{\frac{(4-p)}{2}},$$

$SiO_{4/2}$ and $GSiO_{3/2}$ units is from 0.3 to 1.3.

7. A method according to Claim 1 wherein the steel is prepared by degreasing prior to application of the coating of the silicone based foamable composition.

8. The use of a composition comprising a silicone based foamable composition formed by mixing ingredients comprising (a) one or more polysiloxanes having not less than three alkylhydrogensiloxane units per molecule, (b) one or more polysiloxanes having not less than two silicon-bonded hydroxyl groups per molecule, (c) one or more compounds having carbon-bonded hydroxyl groups present in a proportion to provide from 0 to 3% by weight of the composition, (d) a polyorganosiloxane comprising

$$[F(CF_2)_m(CH_2)_nO]_pSiO_{\frac{(4-p)}{2}},$$

$R_3SiO_{\frac{1}{2}}$ and $SiO_{4/2}$ units and silicon-bonded hydroxyl groups wherein each R represents a monovalent hydrocarbon group containing from 1 to 20 carbon atoms, m is an integer having an average value from 1 to 20, n has the value 1 or 2, p has the value 1, 2 or 3 and (e) a noble metal catalyst for promoting reaction between the ingredients, the ingredients being present in the mixed composition in a proportion such that the ratio of silicon-bonded hydrogen atoms of said one or more polysiloxanes having not less than three alkylhydrogensiloxane units per molecule to silicon-bonded hydroxyl groups and carbon-bonded hydroxyl groups of the other ingredients of the composition lies in the range 1:1 to 6:1 to provide a cured anti-corrosion coating on a metal surface.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 299 641 (DOW CORNING) <br> * claims 1,3 * <br> --- | 1-8 | C08J9/02 <br> C09D5/08 <br> C09D183/04 <br> C09D183/08 |
| Y,D | EP-A-0 338 693 (DOW CORNING) <br> * claim 1 * <br> ----- | 1-8 | |

TECHNICAL FIELDS SEARCHED (Int. Cl.5 )

C08J
C09D
C08K

The present search report has been drawn up for all claims

| Place of search | Date of completion of the search | Examiner |
|---|---|---|
| THE HAGUE | 28 SEPTEMBER 1992 | LENTZ J.C. |

EPO FORM 1503 03.82 (P0401)